# EUROPÄISCHE PATENTSCHRIFT

(11) **EP 3 323 603 B1**
(45) Veröffentlichungstag und Bekanntmachung des Hinweises auf die Patenterteilung: **02.06.2021**
(21) Anmeldenummer: 17201342.7
(22) Anmeldetag: 13.11.2017
(51) Int. Cl.: B30B 9/30

(54) **HORIZONTALE BALLENPRESSE MIT EINER BALLENABBINDEVORRICHTUNG**
HORIZONTAL BALER WITH A BALE BINDING DEVICE
PRESSE À BALLE HORIZONTALE POURVUE D'UN DISPOSITIF DE FICELAGE DES BALLOTS

(30) Priorität: 16.11.2016 DE 102016121981
(43) Veröffentlichungstag der Anmeldung: 23.05.2018
(73) Patentinhaber: SIB Strautmann Ingenieurbüro GmbH, 49219 Glandorf (DE)
(72) Erfinder: WEGLOWSKI, Thomas, 48196 Bad Laer (DE); VOGT, Jan, 49326 Melle (DE); BIRKEMEYER, Ralf, 49176 Hilter (DE)
(74) Vertreter: Schulze Horn, Kathrin

(56) Entgegenhaltungen:
- DE-B- 1 085 460
- DE-U1-202013 012 192

## Beschreibung

Die vorliegende Erfindung betrifft eine horizontale Ballenpresse mit einer Ballenabbindevorrichtung, wobei die Ballenpresse einen horizontal verlaufenden Presskanal mit einer oberseitigen Einfüllöffnung für zu pressendes Pressgut und einen im Presskanal hin und her verfahrbaren Presskolben aufweist, wobei mittels der Ballenabbindevorrichtung ein fertig gepresster Pressballen vor seinem Austritt aus dem Presskanal der Ballenpresse mit einer Abbindung oder mehreren parallelen Abbindungen versehbar ist, wobei die Ballenabbindevorrichtung für jede Abbindung zumindest eine Drahtführungsrollenanordnung sowie eine Drahtklemmvorrichtung als Mittel zur Führung von Abbindedrähten von außen an der Ballenpresse angeordneten Drahtvorratsrollen in den Presskanal, je Abbindung eine in den Presskanal von oben her einführbare und aus diesem nach oben hin herausführbare Drahtziehnadel und je Drahtziehnadel zwei Drahtendendrillvorrichtungen und wenigstens eine Drahtschneidevorrichtung aufweist.

Eine Ballenpresse der eingangs genannten Art ist beispielsweise aus der DE 20 2013 012 192 U1 bekannt. Diese bekannte Ballenpresse dient zum Verdichten von losem Abfallmaterial und zum Verschnüren des verdichteten Abfallmaterials unter Verwendung von Endlosdrähten zu Ballen in einem Presskanal. Dabei werden die Drähte mittels Ziehnadeln für ein Verdrillen positioniert und mit einer Mehrzahl von Verdrilleinheiten verbunden. Mittels einer Mehrzahl von zumindest eine Antriebseinheit aufweisenden Schereinheiten werden nach oder während der Verdrillung die Drähte getrennt, wobei die Ziehnadeln in ihrer Ruhestellung, die Verdrilleinheiten und die Schereinheiten alle auf der gleichen Seite der Ballenpresse angeordnet sind und jede Schereinheit ein feststehendes und ein bewegliches Messer aufweist. Weiterhin ist hier vorgesehen, dass die feststehenden Messer an einem Träger quer über den Presskanal angeordnet sind und dass jedes bewegliche Messer der Schereinheit zu seiner Betätigung mit je einer Doppel-Gelenkkopf-Stange verbunden ist, welche mit der Antriebseinheit in Wirkverbindung sind. So wird eine kompakte Bauweise erzielt.

Als nachteilig wird bei Ballenpressen der vorgenannten Art angesehen, dass bei Störungen der Drahtzufuhr, z. B. wenn ein Draht reißt oder wenn ein Draht, der von einer Rolle abgewickelt wird, zu Ende ist und mit dem Drahtanfang der nachfolgenden Rolle verbunden werden muss, die Arbeit des Pressenbedieners schwierig und zeitaufwändig ist. Das Zu- und Einführen und Einfädeln der Drähte in die Drahtführungen und anderen Teile der Ballenabbindevorrichtung ist umständlich und körperlich sehr belastend, insbesondere im Bereich von unteren Drahtführungen an der Ballenpresse aufgrund der dort oft sehr beengten räumlichen Verhältnisse.

Für die vorliegende Erfindung stellt sich daher die Aufgabe, eine Ballenpresse der eingangs genannten Art zu schaffen, welche die genannten Nachteile vermeidet und bei welcher insbesondere die Arbeit des Pressenbedieners beim Zu- und Einführen und Einfädeln der Drähte in die Drahtführungen und anderen Teile der Ballenabbindevorrichtung vereinfacht und erleichtert ist.

Die Lösung dieser Aufgabe gelingt erfindungsgemäß mit einer Ballenpresse der eingangs genannten Art, die dadurch gekennzeichnet ist, dass zumindest einem Teil der Drahtführungsrollenanordnungen und/oder der Drahtklemmvorrichtungen jeweils ein die Rollen der Drahtführungsrollenanordnungen und/oder Klemmelemente der Drahtklemmvorrichtungen abdeckende Seitenteile zugeordnet sind und dass jedes Seitenteil mittels eines Schnellverschlusses lösbar und abnehmbar oder abklappbar oder wegschwenkbar mit der jeweils zugehörigen Drahtführungsrollenanordnung oder Drahtklemmvorrichtung verbunden ist.

Mit der Erfindung wird die Arbeit des Pressenbedieners beim Zu- und Einführen und Einfädeln der Drähte in die Drahtführungen und anderen Teile der Ballenabbindevorrichtung wesentlich vereinfacht, weil nun nicht mehr jeder Draht mit seinem vorderen Ende voran in die Ballenabbindevorrichtung eingeführt und durch diese hindurchgeführt werden muss, sondern jeder Draht vorteilhaft bei abgenommenen oder abgeklappten oder weggeschwenkten Seitenteilen schnell und einfach von der Seite her in die zu diesem Zweck offenen Drahtführungsrollenanordnungen und/oder Drahtklemmvorrichtungen eingelegt werden kann. Nach dem Anbringen der Seitenteile sind die eingelegten Drähte in ihrer Lage und ihrem Verlauf relativ zu ihren zugehörigen Drahtführungsrollenanordnungen und/oder Drahtklemmvorrichtungen gesichert und können nicht von Rollen abspringen oder an Klemmvorrichtungen vorbeilaufen.

Die Schnellverschlüsse können unterschiedlich ausgeführt sein; es ist aber bevorzugt, dass der/jeder Schnellverschluss durch eine Sternschraube gebildet ist, da diese ein robustes, kostengünstiges und einfach manuell betätigbares Element darstellt.

Zwecks einer günstigen Lage der Verdrillungen der Abbindungen an den Pressballen ist bevorzugt vorgesehen, dass die Abbindedrähte für jede Abbindung durch je einen Untertrumdraht und einen Obertrumdraht gebildet sind, die jeweils an zwei an oder nahe den oberen Querkanten des Pressballens liegenden Drahtendenverdrillungen miteinander verbunden sind.

Ein weiterer Beitrag zu einer ergonomisch günstigen Anordnung der Teile der Ballenpresse, zu denen der Pressenbediener Zugang haben muss, besteht darin, dass bei mehreren für jeden Pressballen vorgesehenen Abbindungen entsprechend mehrere Drahtvorratsrollen für den Untertrumdraht gleichmäßig aufgeteilt an beiden Längsseiten der Ballenpresse angeordnet sind und dass für einen ersten Teil der Abbindungen die Zuführung des Untertrumdrahts an der einen Längsseite und für einen zweiten Teil der Abbindungen die Zuführung des Untertrumdrahts an der anderen Längsseite der Ballenpresse angeordnet ist.

Aus dem gleichen Grund sind zweckmäßig bei mehreren für jeden Pressballen vorgesehenen Abbindungen entsprechend mehrere Drahtvorratsrollen für den Obertrumdraht nebeneinander an einer Oberseite der Ballenpresse angeordnet.

Zur weiteren Verbesserung der Führung der Drähte an der Ballenpresse schlägt die Erfindung vor, dass die Mittel zur Führung der Abbindedrähte an der Ballenpresse angeordnete Drahtleitrohre umfassen.

Eine weitere vorteilhafte Ausgestaltung der Erfindung sieht vor, dass die Mittel zur Führung der Abbindedrähte an der Ballenpresse angebrachte Drahtleitösen in Form von Karabinerhaken umfassen, welche den Vorteil haben, dass ein Draht bei geöffnetem Karabinerhaken von der Seite her in den Karabinerhaken eingelegt werden kann und nicht, wie bei einen festen geschlossenen Ring, mit seinem vorderen Ende voran in Drahtlängsrichtung eingeführt werden muss.

Dadurch, dass bevorzugt die Mittel zur Führung der Abbindedrähte an der Ballenpresse, insbesondere nahe dem Außenumfang der Drahtführungsrollen, lösbar angebrachte Sicherungsstifte in Form von Federsteckern und/oder Splinten umfassen, wird eine hohe Betriebssicherheit der Ballenpresse und ihrer Ballenabbindevorrichtung erzielt, weil ein Abspringen der Drähte von den Drahtführungsrollen mittels der Sicherungsstifte verhindert wird. Zugleich ist aber ein einfaches Einlegen der Drähte bei abgezogenen Sicherungsstiften möglich.

Eine weitere Erleichterung der Arbeit des Pressenbedieners wird dadurch erreicht, dass vorzugsweise in jeweils mehrere Rollen aufweisenden Drahtführungsrollenanordnungen wenigstens eine Rolle relativ zu der anderen Rolle oder den anderen Rollen in ihrer Lage zwischen einer eine Drahtumlenkung bewirkenden Arbeitsstellung für ein Abbinden von Pressballen und einer umlenkungsfreien Einfädelstellung für ein Einfädeln eines Abbindedrahts in die Drahtführungsrollenanordnungen verstellbar ist. Der Abbindedraht kann somit z. B. zunächst gradlinig, d. h. ohne Biegung und somit einfach, in die Rollenanordnung eingelegt werden. Erst danach, nämlich wenn die verstellbare Rolle in ihre Arbeitsstellung verstellt wird, erfolgt eine Umlenkung des Abbindedrahts.

Eine Weiterbildung der Ballenpresse sieht dazu vor, dass jeweils die verstellbare Rolle an einem um eine Schwenkachse verschwenkbaren, in der Arbeitsstellung und in der Einfädelstellung jeweils arretierbaren, armförmigen Rollenhalter gelagert ist. Durch die armförmige Gestaltung des Rollenhalters kann dieser mittels Hebelwirkung relativ leicht durch einen Pressenbediener verstellt werden, was ein weiterer Beitrag zur Arbeitserleichterung ist.

Im Folgenden wird ein Ausführungsbeispiel der Erfindung anhand einer Zeichnung erläutert. Die Figuren der Zeichnung zeigen:
- Figur 1: eine horizontale Ballenpresse in Seitenansicht, teils in offener Darstellung,
- Figur 2: im Bereich einer Ballenabbindevorrichtung der Ballenpresse liegende Anordnungen von Führungsmitteln für Abbindedrähte, in Ansicht schräg von oben,
- Figur 3: eine im Bereich eines Bodens eines Presskanals der Ballenpresse liegende Anordnung von Führungsmitteln für Abbindedrähte, in Draufsicht,
- Figur 4: eine in einem unteren Bereich der Ballenabbindevorrichtung liegende Anordnung von Führungsmitteln für Abbindedrähte, in einem ersten Betriebszustand, in Seitenansicht,
- Figur 5: die Anordnung von Führungsmitteln aus Figur 4, in einem zweiten Betriebszustand, in Seitenansicht,
- Figur 6: die Anordnung von Führungsmitteln aus Figur 4, in dem ersten Betriebszustand, in perspektivischer Ansicht von der Seite,
- Figur 7: die Anordnung von Führungsmitteln aus Figur 6, in dem zweiten Betriebszustand, in perspektivischer Ansicht von der Seite,
- Figur 8: den in Figur 1 rechten Teil der Ballenpresse mit einer seitlich an dieser liegenden Anordnung von Führungsmitteln für Abbindedrähte, in Seitenansicht, und
- Figur 9: einen Pressballen mit Abbindung, im Querschnitt.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

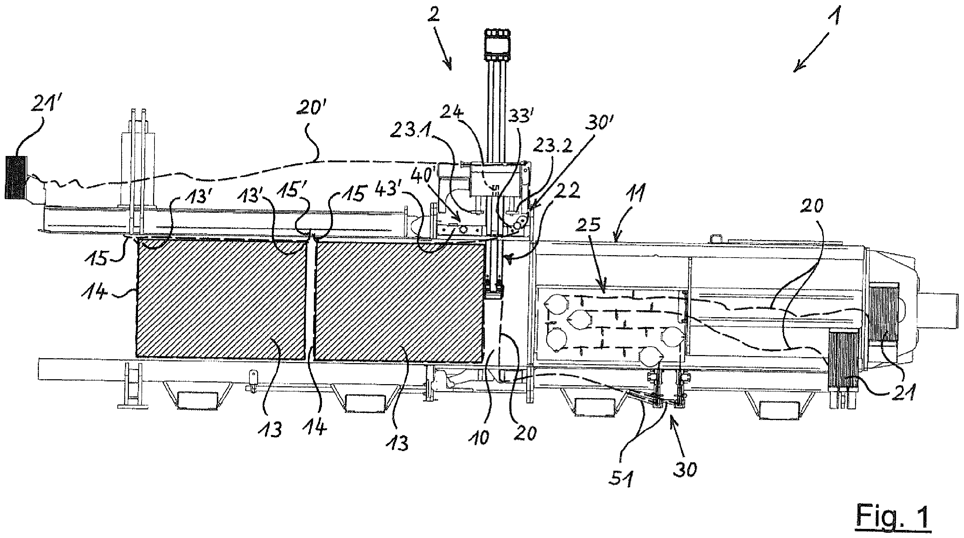

Figur 1 der Zeichnung zeigt eine horizontale Ballenpresse 1 in Seitenansicht, teils in offener Darstellung. Die Ballenpresse 1 besitzt einen horizontal verlaufenden Presskanal 10, der in seinem vorderen, in Figur 1 rechten Teil geschlossen und in seinem hinteren, in Figur 1 linken Teil seitlich offen dargestellt ist. Im ersten, hier geschlossen dargestellten Teil des Presskanals 10 sind ein sich hier in seiner zurückgezogenen Stellung befindender Presskolben und ein zugehöriger Antrieb, wie hydraulische Kolben-Zylinder-Einheit, angeordnet. Oberseitig besitzt der Presskanal 10 eine Einfüllöffnung 11, durch welche zu pressendes Pressgut bei zurückgefahrenem Presskolben in den Presskanal 10 eingebbar ist. Durch Verfahren des Presskolbens in Pressrichtung, das heißt in Figur 1 von rechts nach links, wird das eingegebene Pressgut zu Pressballen 13 verdichtet, von denen zwei im hinteren, offenen Teil des Presskanals 10 dargestellt sind. Zur Bildung des nötigen Gegendrucks beim Pressen besitzt der Presskanal 10 an seinem Ende eine den Querschnitt des Presskanals 10 verändernde Ballenbremse an sich bekannter Ausführung. Fertige Pressballen 13 werden bei gelöster Ballenbremse am hinteren, in Figur 1 linken, Ende des Presskanals 10 aus diesem ausgeschoben.

Damit die Pressballen 13 ihre in der Ballenpresse 1 erzeugte Form beibehalten, werden sie mittels einer etwa in Längsmitte der Ballenpresse 1 angeordneten Ballenabbindevorrichtung 2 mit, in der Regel zwei bis vier, Abbindungen 14 versehen. Die Abbildungen 14 bestehen hier jeweils aus einem Untertrumdraht 20 und einem Obertrumdraht 20', die jeweils an den beiden oberen Querkanten 13' eines jeden Pressballens 13 mittels Verdrillungen 15, 15' miteinander verbunden sind.

Der Untertrumdraht 20 für jede Abbindung 14 kommt von Vorratsrollen 21, die an dem vorderen, in Figur 1 rechten Ende der Ballenpresse 1 außen am Presskanal 10 angeordnet sind. Von den Vorratsrollen 21 wird der Untertrumdraht 20 über eine Drahtrichtvorrichtung 25 geführt, welche ebenfalls seitlich, aber etwas weiter hinten, außen am Presskanal 10 angeordnet ist.

Von der Drahtrichtvorrichtung 25 werden die Untertrumdrähte 20 in Drahtleitrohren 51 weitergeführt, die an einem Boden des Presskanals 10 angeordnet sind.

Eine spiegelsymmetrische Anordnung von Vorratsrollen 21, Drahtrichtvorrichtung 25 und Drahtleitrohren 51 befindet sich an der vom Betrachter abgewandten, anderen Außenseite des vorderen Teils der Presskanals 10 der Ballenpresse 1. Somit können bei der Ballenpresse 1 gemäß dem in Figur 1 gezeigten Beispiel an jedem Pressballen 13 bis zu vier Abbindungen 14 angebracht werden.

Die Obertrumdrähte 20' kommen von Vorratsrollen 21', die am hinteren, in Figur 1 linken Ende des Presskanals 10 der Ballenpresse 1 oberseitig angeordnet sind. Von jeder Vorratsrolle 21' verläuft der Obertrumdraht 20' zu einer Drahtführungsrollenanordnung 30' im Bereich der Ballenabbindevorrichtung 2, wo der Obertrumdraht 20' umgelenkt und zeitweise geklemmt wird.

Die Ballenabbindevorrichtung 2 ist in Figur 1 in einer Betriebsstellung gezeigt, in der sie mittels ihrer Drahtziehnadeln 22 gerade die Untertrumdrähte 20 erfasst hat und in Form einer Drahtschlaufe nach oben zieht. Wenn die Drahtziehnadeln 22 ihre oberste Stellung erreicht haben, werden je vorgesehener Abbindung 14 zwei Drahtenddrillvorrichtungen 23.1, 23.2 und eine Drahtschneidevorrichtung 24 aktiviert, die in an sich bekannter Weise jeweils die Enden von je zwei Untertrumdrähten 20 und Obertrumdrähten 20' miteinander verdrillen und abschneiden. Somit wird der sich gerade mit seiner Rückseite im Bereich der Ballenabbindevorrichtung 2 befindende, in Figur 1 rechte Pressballen 13 mittels der zweiten Verdrillung 15' endgültig abgebunden und gleichzeitig eine erste Verdrillung 15 der Abbindung 14 für einen noch zu pressenden, nachfolgenden Pressballen gebildet.

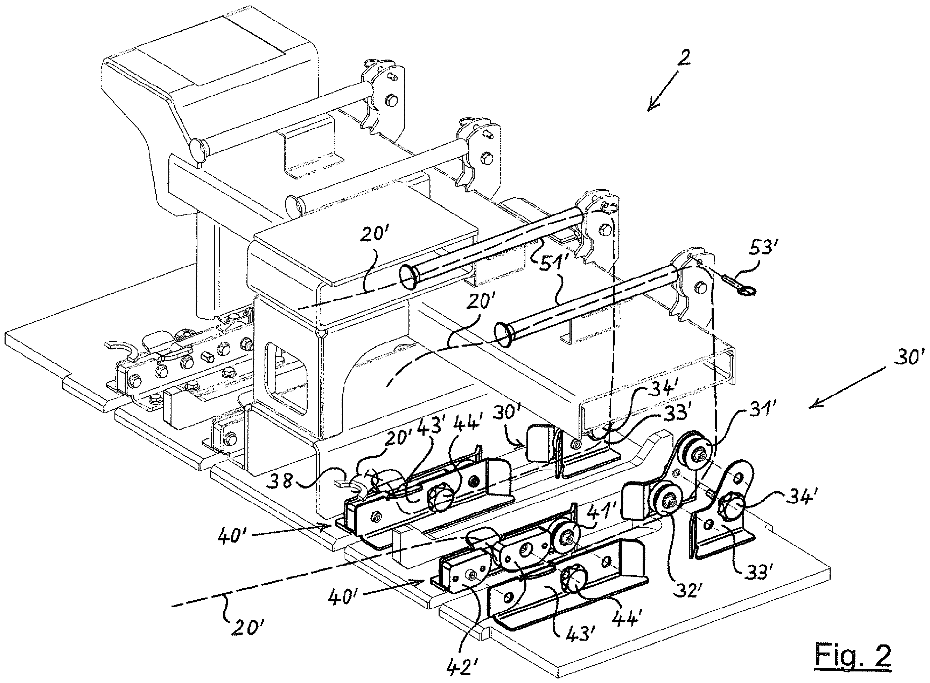

Figur 2 zeigt im Bereich der Ballenabbindevorrichtung 2 der Ballenpresse 1 liegende Anordnungen 30' von Führungsmitteln für Obertrumdrähte 20' in Ansicht schräg von oben. Insgesamt sind hier vier Anordnungen 30' vorhanden, wobei je zwei Anordnungen 30' spiegelsymmetrisch zu einer vertikalen Längsmittelebene angeordnet sind. Außerdem ist jeder Anordnung 30' jeweils eine Drahtklemmvorrichtung 40' nachgeschaltet.

Die Obertrumdrähte 20' kommen in Figur 2 von links her von ihren zugehörigen, hier nicht sichtbaren Vorratsrollen 21' und verlaufen zunächst durch je ein horizontales Drahtleitrohr 51'. An das Ende jedes Drahtleitrohrs 51' schließt sich eine hier verdeckte Umlenkrolle an, über welche der Obertrumdraht 20' um etwa 90° nach unten umgelenkt wird und relativ zu welcher der Obertrumdraht 20' jeweils durch einen leicht entfernbaren und einsetzbaren Sicherungsstift 53', wie Federstecker, gegen Abspringen gesichert ist.

Unterhalb der Drahtleitrohre 51' sind die Drahtführungsrollenanordnungen 30' mit jeweils einer ersten Rolle 31' und einer zweiten Rolle 32' angeordnet, wobei jede Drahtführungsrollenanordnung 30' ein leicht abnehmbares und leicht anbringbares Seitenteil 33' aufweist. Dabei ist in Figur 2 an der vorderen Drahtführungsrollenanordnung 30' das Seitenteil 33' abgenommen dargestellt, während bei der in Figur 2 dahinter dargestellten zweiten Drahtführungsrollenanordnung 30' das zugehörige Seitenteil 33' angebracht ist. Bei abgenommenem Seitenteil 33' kann der Obertrumdraht 20' schnell und einfach über die Rollen 31', 32' geführt und anschließend durch Anbringen des Seitenteils 33' gegen ein Abspringen von den Rollen 31', 32' gesichert werden. Zum schnellen Verbinden des Seitenteils 33' mit der zugehörigen Drahtführungsrollenanordnung 30' dient ein Schnellverschluss 34', hier beispielhaft in Form einer Sternschraube. Die Seitenteile 33' können dabei, wie hier dargestellt, komplett abnehmbar oder auch abklappbar oder wegschwenkbar sein, um sie von den Rollen 31', 32' ausreichend weit zu entfernen.

Weiter in Laufrichtung des Obertrumdrahts 20' gesehen folgt auf die Drahtführungsrollenanordnungen 30' jeweils eine Drahtklemmvorrichtung 40'. Jede Drahtklemmvorrichtung 40' besitzt eingangsseitig eine Rolle 41' sowie im Anschluss daran zwei relativ zueinander bewegliche, in ihrem Abstand zueinander dadurch veränderbare Klemmelemente 42', zwischen welchen der Obertrumdraht 20' hindurchgeführt ist. Zum Einführen der Obertrumdrähte 20' in die Drahtklemmvorrichtungen 40' haben diese jeweils ein leicht lösbares und leicht anbringbares Seitenteil 43'. In Figur 2 ist bei der ersten, vorderen Drahtklemmvorrichtung 40' das Seitenteil 43' abgenommen dargestellt, während es bei der dahinter angeordneten, zweiten Drahtklemmvorrichtung 40' angebracht ist. Bei abgenommenem Seitenteil 43' kann der Obertrumdraht 20' schnell und einfach über die Rolle 41' und zwischen den Klemmelementen 42' hindurch von der Seite her eingeführt und anschließend durch Anbringen des Seitenteils 43' gegen ein Abspringen von der Rolle 41' und gegen ein Entfernen von den zusammenwirkenden Klemmelementen 42' gesichert werden. Zum schnellen Verbinden des Seitenteils 43' mit der zugehörigen Drahtklemmvorrichtung 40' dient ein Schnellverschluss 44', auch hier beispielhaft in Form einer Sternschraube.

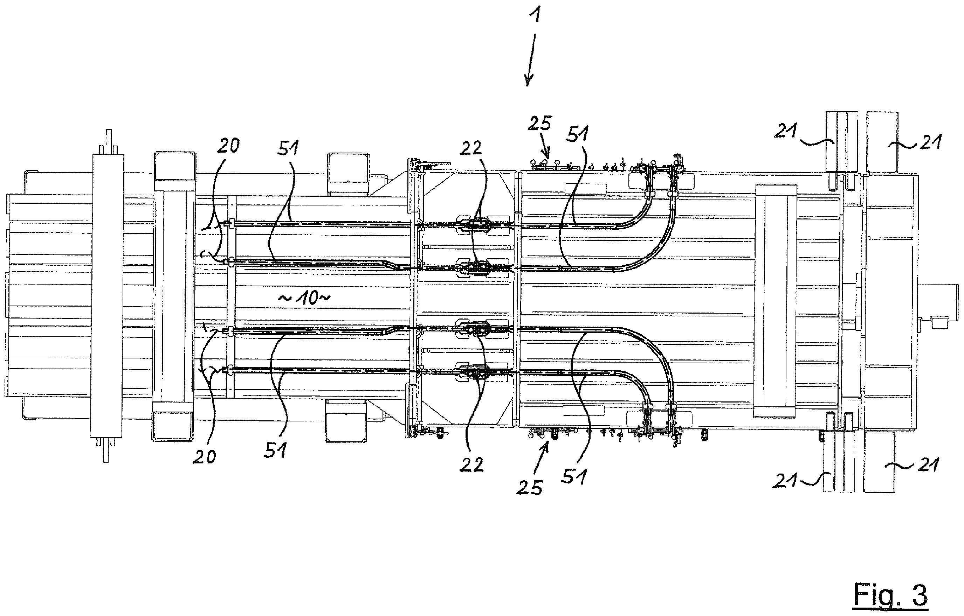

Zusätzlich zeigt die Figur 2 am Auslaufbereich der zweiten Drahtklemmvorrichtung 40' einen Drahthaltebügel 38, der an einem in Figur 2 nicht dargestellten, ortsfesten Teil der Ballenpresse 1 angebracht ist und der dazu dient, ein vorderes Ende des Obertrumdraht 20' bei Bedarf daran anzubinden. Dieser Bedarf besteht insbesondere dann, wenn ein neuer Obertrumdraht 20' einzulegen oder ein gerissener Obertrumdraht 20' wieder einzulegen ist, um daran anschließend mittels der Drahtziehnadeln 22 weiteren Draht von den Vorratsrollen 20' abzuziehen, ohne dass sich der Draht von den Drahtziehnadeln 22 wegen eines losen Drahtanfangs trennen könnte. Figur 3 zeigt eine im Bereich eines Bodens des Presskanals 10 der Ballenpresse 1 liegende Anordnung von Führungsmitteln für Abbindedrähte in Draufsicht, konkret eine Anordnung von Drahtleitrohren 51, durch welche die Untertrumdrähte 20 geführt sind. Dabei verlaufen die Drahtleitrohre 51 von den beiden Längsseiten des Presskanals 10 zunächst in Richtung zur Längsmitte des Presskanals 10 und biegen dann in einem ausreichend großen Radius in Längsrichtung des Presskanals 10 ab. In ihrem Verlauf weisen die Drahtleitrohre 51 jeweils eine Unterbrechung auf, in deren Bereich sich die Drahtziehnadeln 22 in Vertikalrichtung, gemäß Figur 3 senkrecht zur Zeichnungsebene, bewegen.

Ganz rechts in Figur 3 sind außen an den beiden Längsseiten des Presskanals 10, das heißt in Figur 3 oben und unten, je zwei der Vorratsrollen 21 für die Untertrumdrähte 20 sichtbar. Weiter hinten, das heißt in Figur 3 von den Vorratsrollen 21 nach links beabstandet, sind links und rechts außen an den Längsseiten des Presskanals 10 jeweils die Drahtrichtvorrichtungen 25 erkennbar.

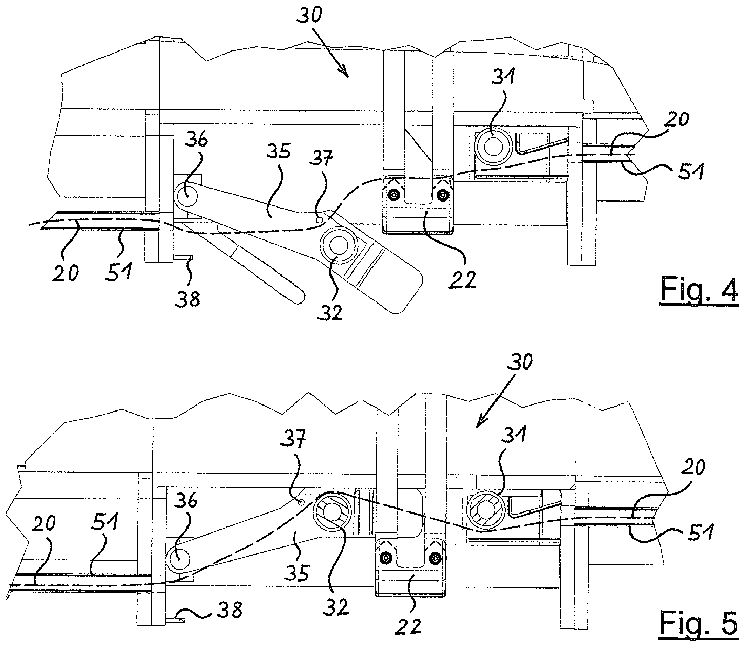

Figur 4 zeigt eine in einem unteren Bereich der Ballenabbindevorrichtung 2 liegende Anordnung von Führungsmitteln für Abbindedrähte, hier für die Untertrumdrähte 20, in einem ersten Betriebszustand, in Seitenansicht. Der hier dargestellte Betriebszustand dient dem Einführen oder Einlegen der Untertrumdrähte 20 in die Ballenabbindevorrichtung 2 im Bewegungsbereich von deren Drahtziehnadeln 22. Jeweils in Laufrichtung des Untertrumdrahts 20 gesehen vor und hinter dem Bewegungsbereich der Drahtziehnadeln 22 ist je eine vordere Rolle 31 und hintere Rolle 32 angeordnet. Die Rolle 31 ist dabei ortsfest nahe dem Auslass des jeweils zugehörigen ersten Abschnitts des Drahtleitrohrs 51 angeordnet, während jeweils die zweite Rolle 32 an einem in einer vertikalen Ebene um eine Schwenkachse 36 schwenkbeweglichen armförmigen Rollenhalter 35 gelagert ist. In Figur 4 ist der Rollenhalter 35 in eine untere Position verschwenkt, in welcher das Einführen und Einfädeln des Untertrumdrahts 20 von dem in Figur 4 rechts sichtbaren Teil des Drahtleitrohrs 51 in den weiteren, in Figur 4 ganz links teilweise sichtbaren Abschnitt des Drahtleitrohre 51 erleichtert ist. Unterhalb der Schwenkachse 36 ist einer der Drahthaltebügel 38 sichtbar.

Figur 5 zeigt die Anordnung von Führungsmitteln aus Figur 4 in einem zweiten Betriebszustand, in Seitenansicht. Der Rollenhalter 35 mit der zweiten Rolle 32 ist nun um die Schwenkachse 36 in eine obere Position verschwenkt und arretiert, in der die Rolle 32 ihre für einen Abbindevorgang notwendige Betriebsstellung einnimmt. In eine Bohrung 37 in unmittelbarer Nähe des Außenumfangs der zweiten Rolle 32 kann zur Sicherung des Untertrumdrahts 20 auf der Rolle 32 ein hier nicht dargestellter Sicherungsstift, wie Federstecker, eingesteckt werden. Unterhalb der Schwenkachse 36 ist auch hier einer der Drahthaltebügel 38 sichtbar.

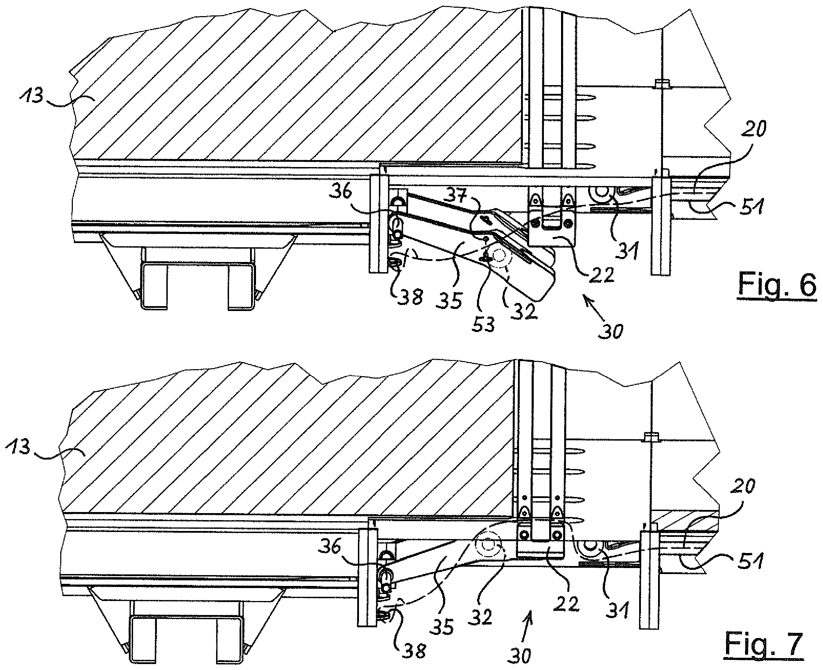

Figur 6 zeigt die Anordnung von Führungsmitteln aus Figur 4 in dem ersten Betriebszustand in perspektivischer Ansicht von der Seite und Figur 7 zeigt die Anordnung der Führungsmittel aus Figur 6 in dem zweiten Betriebszustand in perspektivischer Ansicht von der Seite. Hier wird insbesondere deutlich, dass für jeden Untertrumdraht 20 ein Rollenhalter 35 mit je einer Rolle 32 vorgesehen ist. Außerdem ist in Figur 6 der nun in die Bohrung 37 eingesetzte Sicherungsstifte 53 sichtbar. Links oben in den Figuren 6 und 7 ist jeweils ein Teil eines Pressballens 13 sichtbar. Hinsichtlich der weiteren in den Figuren 6 und 7 sichtbaren Einzelteile wird auf die Beschreibung der Figuren 4 und 5 verwiesen.

Unterschiedlich zu den Figuren 4 und 5 ist, dass in den Figuren 6 und 7 jeweils das vordere Ende des Untertrumdrahts 20 an den Drahthaltebügeln 38 angebunden dargestellt ist.

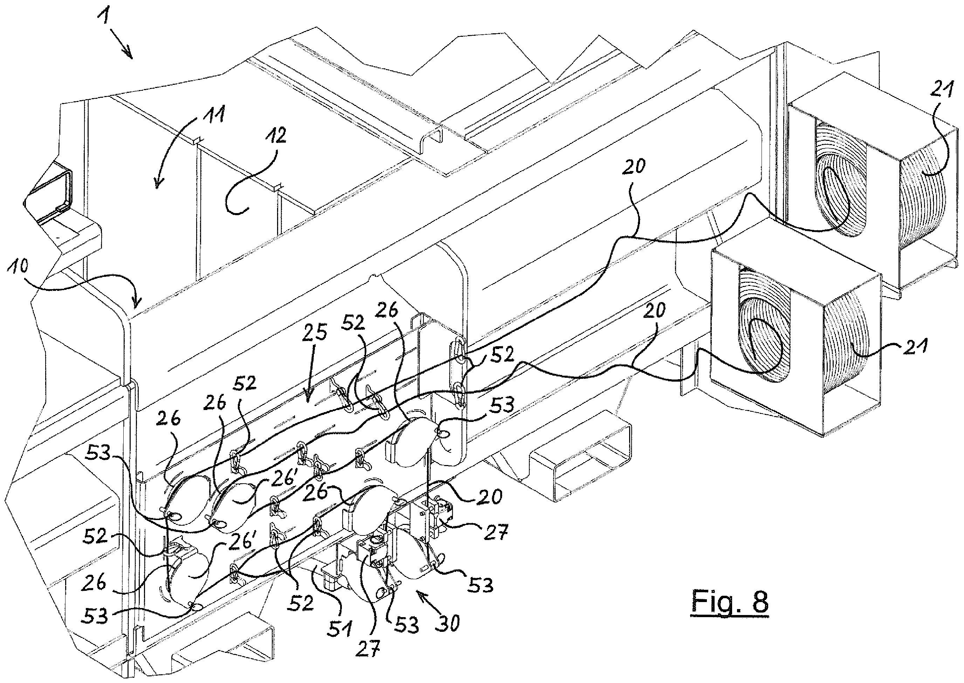

Figur 8 zeigt den vorderen, in Figur 1 rechten, Teil der Ballenpresse 1 mit einer seitlich an dieser liegenden Anordnung von Führungsmitteln für Abbindedrähte, hier zwei der Untertrumdrähte 20, in Seitenansicht. Bei der hier sichtbaren Anordnung von Führungsmitteln handelt es sich um eine der zwei Drahtrichtvorrichtungen 25, die an der in Figur 8 sichtbaren Längsseite sowie an der gegenüberliegenden, vom Betrachter abgewandten Längsseite des Presskanals 10 angeordnet sind. Von den zwei Vorratsrollen 21 kommen die zwei Untertrumdrähte 20 und werden über diverse Drahtleitösen 52, die hier die Form von Karabinerhaken haben, sowie Rollen 26 geführt und umgelenkt, um den Untertrumdrähten 20 eine möglichst gradlinige, gestreckte Form zu geben. Jeder Rolle 26 sind eine eigene Abdeckung 26' sowie ein nahe dem Rollenaußenumfang angeordneter Sicherungsstift 53 zugeordnet, um die Untertrumdrähte 20 auf den Rollen 26 gegen ein Abspringen zu sichern. Zum Einlegen oder Einführen der Untertrumdrähte 20 werden die Sicherungsstifte 53 vom Pressenbediener vorübergehend entfernt. Die Abdeckungen 26' sind hier fest angeordnet; alternativ können sie auch abnehmbar oder abklappbar ausgebildet sein.

Aus den Drahtrichtvorrichtungen 25 laufen die Untertrumdrähte 20 über je einen die Anwesenheit oder das Fehlen des Untertrumdrahts 20 detektierenden Drahtsensor 27 in Form eines induktiven Näherungsschalters und über eine weitere Umlenkung in jeweils eines der Drahtleitrohre 51 unten am Presskanal 10.

Oben links in Figur 8 fällt der Blick in die hier offen dargestellte Einfüllöffnung 11 zum Einfüllen von Pressgut in den darunter liegenden Presskanal 10, der nach vorne hin, das heißt in Figur 8 nach rechts hin, durch den Presskolben 12, der in Längsrichtung des Presskanals 10 vor und zurück verfahrbar ist, begrenzt wird. In Figur 8 befindet sich der Presskolben 12 in seiner vollständig zurückgefahrenen Stellung.

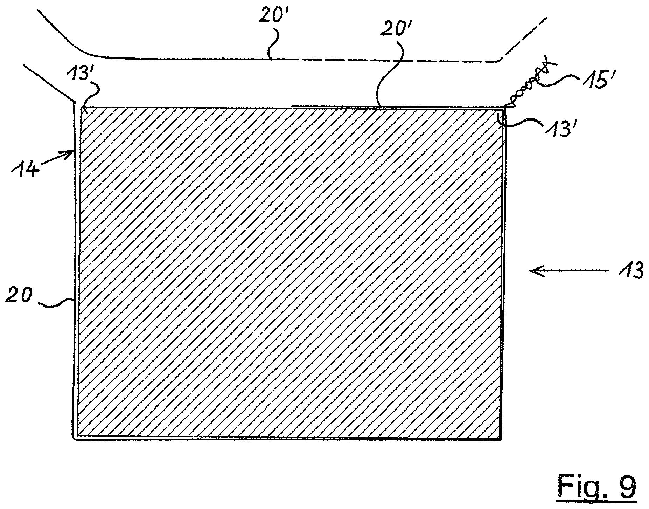

Figur 9 schließlich zeigt einen in der Ballenpresse erzeugten Pressballen 13 mit Abbindung 14 im Querschnitt. Der Pressballen 13 hat die Form eines Quaders mit sechs Flächen und zwischen diesen liegenden rechtwinkligen Kanten. Die hier sichtbare eine Abbindung 14 von mehreren Abbindungen 14 besteht aus zwei Abschnitten, nämlich einem durch einen Abschnitt des Untertrumdrahts 20 gebildeten unteren Abschnitt und einem durch einen Abschnitt des Obertrumdrahts 20' gebildeten oberen Abschnitt. An den beiden oberen Querkanten 13' des Pressballens 13 werden jeweils die Enden der Abschnitte von Untertrumdraht 20 und Obertrumdraht 20' zur Verbindung miteinander mittels der in der Ballenabbindevorrichtung 2 vorgesehenen Drahtendendrillvorrichtungen 23.1, 23.2 verdrillt und mittels der Drahtschneidevorrichtung 24 abgeschnitten, welche in Figur 1 dargestellt sind.

An der in Figur 9 rechte oberen Querkante 13' ist schon die Verdrillung 15' angebracht, während an der in Figur 9 linken oberen Querkante 13' des Pressballens 13 die Verdrillung noch nicht hergestellt ist.

### Bezugszeichenliste:

| Zeichen | Bezeichnung |
|---|---|
| 1 | Ballenpresse |
| 10 | Presskanal |
| 11 | Einfüllöffnung |
| 12 | Presskolben |
| 13 | Pressballen |
| 13' | obere Querkanten von 13 |
| 14 | Abbindungen an 13 |
| 15, 15' | Verdrillungen an 14 |
| | |
| 2 | Ballenabbindevorrichtung |
| 20 | Untertrumdraht |
| 20' | Obertrumdraht |
| 21, 21' | Vorratsrollen für 20, 20' |
| 22 | Drahtziehnadeln |
| 23.1, 23.2 | Drahtendendrillvorrichtungen |
| 24 | Drahtschneidevorrichtung |
| 25 | Drahtrichtvorrichtung für 20 |
| 26 | Rollen in 25 |
| 26' | Abdeckungen an 26 |
| 27 | Drahtsensor |
| | |
| 30, 30' | Drahtführungsrollenanordnungen für 20, 20' |
| 31, 32 | Rollen in 30 |
| 31', 32' | Rollen in 30' |
| 33' | Seitenteil von 30' |
| 34' | Schnellverschluss an 33' |
| 35 | Rollenhalter |
| 36 | Schwenkachse von 35 |
| 37 | Bohrung in 35 für 53 |
| 38 | Drahthaltebügel |
| | |
| 40' | Drahtklemmvorrichtungen für 20' |
| 41' | Rolle in 40' |
| 42' | Klemmelemente in 40' |
| 43' | Seitenteil von 40' |
| 44' | Schnellverschluss an 43' |
| | |
| 51, 51' | Drahtleitrohre |
| 52 | Drahtleitösen (Karabinerhaken) |
| 53, 53' | Sicherungsstifte (Federstecker, Splinte) |

## Patentansprüche

1. Horizontale Ballenpresse (1) mit einer Ballenabbindevorrichtung (2), wobei die Ballenpresse (1) einen horizontal verlaufenden Presskanal (10) mit einer oberseitigen Einfüllöffnung (11) für zu pressendes Pressgut und einen im Presskanal (10) hin und her verfahrbaren Presskolben (12) aufweist, wobei mittels der Ballenabbindevorrichtung (2) ein fertig gepresster Pressballen (13) vor seinem Austritt aus dem Presskanal (10) der Ballenpresse (1) mit einer oder mehreren parallelen Abbindungen (14) versehbar ist, wobei die Ballenabbindevorrichtung (2) für jede Abbindung (14) zumindest eine Drahtführungsrollenanordnung (30, 30') sowie eine Drahtklemmvorrichtung (40') als Mittel zur Führung von Abbindedrähten (20, 20') von außen an der Ballenpresse (1) angeordneten Drahtvorratsrollen (21, 21') in den Presskanal (10), je Abbindung (14) eine in den Presskanal (10) von oben her einführbare und aus diesem nach oben hin herausführbare Drahtziehnadel (22) und je Drahtziehnadel (22) zwei Drahtendendrillvorrichtungen (23.1, 23.2) und wenigstens eine Drahtschneidevorrichtung (24) aufweist,
**dadurch gekennzeichnet,**
**dass** zumindest einem Teil der Drahtführungsrollenanordnungen (30, 30') und/oder der Drahtklemmvorrichtungen (40') jeweils ein die Rollen (31, 32, 31', 32') der Drahtführungsrollenanordnungen (30, 30') und/oder Klemmelemente (42') der Drahtklemmvorrichtungen (40') abdeckende Seitenteile (33', 43') zugeordnet sind und dass jedes Seitenteil (33', 43') mittels eines Schnellverschlusses (34', 44') lösbar und abnehmbar oder abklappbar oder wegschwenkbar mit der jeweils zugehörigen Drahtführungsrollenanordnung (30, 30') oder Drahtklemmvorrichtung (40') verbunden ist.

2. Ballenpresse nach Anspruch 1, **dadurch gekennzeichnet, dass** der/jeder Schnellverschluss (34'. 44') durch eine Sternschraube gebildet ist.

3. Ballenpresse nach Anspruch 1 oder 2, **dadurch gekennzeichnet, dass** die Abbindedrähte (20, 20') für jede Abbindung (14) durch je einen Untertrumdraht (20) und einen Obertrumdraht (20') gebildet sind, die jeweils an zwei an oder nahe den oberen Querkanten (13') des Pressballens (13) liegenden Drahtendenverdrillungen (15, 15') miteinander verbunden sind.

4. Ballenpresse nach Anspruch 3, **dadurch gekennzeichnet, dass** bei mehreren für jeden Pressballen (13) vorgesehenen Abbindungen (14) entsprechend mehrere Drahtvorratsrollen (21) für den Untertrumdraht (20) gleichmäßig aufgeteilt an beiden Längsseiten der Ballenpresse (1) angeordnet sind und dass für einen ersten Teil der Abbindungen (14) die Zuführung des Untertrumdrahts (20) an der einen Längsseite und für einen zweiten Teil der Abbindungen (14) die Zuführung des Untertrumdrahts (20) an der anderen Längsseite der Ballenpresse (1) angeordnet ist.

5. Ballenpresse nach Anspruch 3 oder 4, **dadurch gekennzeichnet, dass** bei mehreren für jeden Pressballen (13) vorgesehenen Abbindungen (14) entsprechend mehrere Drahtvorratsrollen (21') für den Obertrumdraht (20') nebeneinander an einer Oberseite der Ballenpresse (1) angeordnet sind.

6. Ballenpresse nach einem der Ansprüche 1 bis 5, **dadurch gekennzeichnet, dass** Mittel zur Führung der Abbindedrähte (20, 20') an der Ballenpresse (1) angeordnete Drahtleitrohre (51, 51') umfassen.

7. Ballenpresse nach einem der Ansprüche 1 bis 6, **dadurch gekennzeichnet, dass** Mittel zur Führung der Abbindedrähte (20, 20') an der Ballenpresse (1) angebrachte Drahtleitösen (52) in Form von Karabinerhaken umfassen.

8. Ballenpresse nach einem der Ansprüche 1 bis 7, **dadurch gekennzeichnet, dass** Mittel zur Führung der Abbindedrähte (20, 20') an der Ballenpresse (1), insbesondere nahe dem Außenumfang der Drahtführungsrollen (31, 32, 31', 32'), lösbar angebrachte Sicherungsstifte (53, 53') in Form von Federsteckern und/oder Splinten umfassen.

9. Ballenpresse nach einem der Ansprüche 1 bis 8, **dadurch gekennzeichnet, dass** in jeweils mehrere Rollen (31, 32) aufweisenden Drahtführungsrollenanordnungen (30) wenigstens eine Rolle (32) relativ zu der anderen Rolle (31) oder den anderen Rollen (31) in ihrer Lage zwischen einer eine Drahtumlenkung bewirkenden Arbeitsstellung für ein Abbinden von Pressballen (13) und einer umlenkungsfreien Einfädelstellung für ein Einfädeln eines Abbindedrahts (20, 20') in die Drahtführungsrollenanordnungen (30) verstellbar ist.

10. Ballenpresse nach Anspruch 9, **dadurch gekennzeichnet, dass** jeweils die verstellbare Rolle (32) an einem um eine Schwenkachse (36) verschwenkbaren, in der Arbeitsstellung und in der Einfädelstellung jeweils arretierbaren, armförmigen Rollenhalter (35) gelagert ist.

## Claims

1. Horizontal baler (1) with a bale binding device (2), comprising a horizontal compacting channel (10) with a filler opening (11) on its upper side for material to be compacted and a pressing ram (12) reciprocating in the compacting channel (10); with a finished compacted bale (13) being provided with one or more parallel bindings (14) by a bale binding device (2) prior to exiting the compacting channel (10); with the bale binding device (2) having at least one wire-guiding roller arrangement (30, 30') and a wire-clamping device (40') for each binding (14) as means of guiding binding wires (20, 20') from external wire supply spools (21, 21') arranged on the baler (1) into the compacting channel (10); the bale binding device also having one wire threader (22) per binding (14) that can be inserted from above into the compacting channel (10) and upwardly out of the same, two wire-end twisting devices (23.1, 23.2) per wire threader (22); and at least one wire-cutting device (24),
**characterised in that**
side parts (33', 43') covering the rollers (31, 32, 31', 32') of the wire-guiding roller arrangements (30, 30') and/or clamping elements (42') of the wire-clamping devices (40') are associated with at least a part of the wire-guiding roller arrangements (30, 30') and/or clamping elements (42'), and that each side part (33', 43') is releasably connected by a quick-release fastener (34', 44') to the associated wire-guiding roller arrangement (30, 30') or wire-clamping device (40') so as to enable it to be removed or flipped off or swung aside.

2. The baler according to claim 1, **characterised in that** the/each quick-release fastener (34'. 44') is in the form of a star screw.

3. The baler according to claim 1 or 2, **characterised in that** the binding wires (20, 20') for each binding (14) are provided in the form of a lower wire strand (20) and an upper wire strand (20') interconnected in each case at two wire-end twists (15, 15') lying at or near the upper transverse edge (13') of the bale (13).

4. The baler according to claim 3, **characterised in that** in a plurality of bindings (14) provided for each bale (13) a corresponding plurality of wire supply spools (21) for the lower wire strand (20) are uniformly distributed on both longitudinal sides of the baler (1) and for a first portion of the bindings (14) the lower wire strand (20) is delivered from the one longitudinal side and for a second portion of the bindings (14) the lower wire strand (20) is delivered from the other longitudinal side of the baler (1).

5. Baler according to claim 3 or 4, **characterised in that** in a plurality of bindings (14) provided for each bale (13) a corresponding plurality of wire supply spools (21') for the upper wire strand (20') are arranged side by side on an upper side of the baler (1).

6. The baler according to one of claims 1 to 5, **characterised in that** the means for guiding the binding wires (20, 20') include wire-guiding pipes (51, 51') arranged on the baler (1).

7. The baler according to one of claims 1 to 6, **characterised in that** the means for guiding the binding wires (20, 20') include wire-guiding loops (52) in the form of snap hooks attached to the baler (1).

8. The baler according to one of claims 1 to 7, **characterised in that** the means for guiding the binding wires (20, 20') on the baler (1), particularly near the outer circumference of the wire-guiding rollers (31, 32, 31', 32'), include releasably attached locking pins (53, 53') in the form of spring cotter pins and/or split pins.

9. Baler according to one of claims 1 to 8, **characterised in that** in wire-guiding roller arrangements (30), each having several rollers (31, 32), at least one roller (32) is adjustable relative to the other roller (31) or rollers (31) in its position between a working position in which a wire is deflected to bind bales (13) and a non-deflecting threading position in which a binding wire (20, 20') is threaded into the wire-guiding roller arrangements (30).

10. The baler according to claim 9, **characterised in that** each particular adjustable roller (32) is mounted on an arm-like roller holder (35) for pivotal movement around a pivot axis (36) and can be locked in place in the working position and in the threading position.

## Revendications

1. Presse à balles horizontale (1) pourvue d'un dispositif de ficelage des ballots (2), ladite presse à balles (1) présentant un canal de presse (10) s'étirant à l'horizontal pourvu d'un orifice de remplissage (11) sur la face supérieure pour du matériau à presser et d'un piston de presse (12) déplaçable en va-et-vient dans ledit canal de presse (10), un ballot pressé (13) fini pouvant être muni, à l'aide du dispositif de ficelage des ballots (2), d'un ou de plusieurs ficelages (14) parallèles avant de sortir du canal de presse (10) de la presse à balles (1), ledit dispositif de ficelage (2) présentant pour chaque ficelage (14) au moins un agencement de bobines de guidage de fil (30, 30') ainsi qu'un dispositif serre-fil (40') servant de moyen de guidage de fils de ficelage (20, 20') des bobines de réserve de fil (21, 21'), qui sont agencées à l'extérieur de la presse à balles (1), dans le canal de presse (10), une aiguille à tréfiler de fil (22) par ficelage (14) qui peut être introduite dans le canal de presse (10) par le haut et en être ressortie vers le haut, et, par aiguille à tréfiler de fil (22), deux dispositifs de drille d'extrémités de fil (23.1, 23.2) et au moins un dispositif de coupe de fil (24),
**caractérisée en ce**
**que** des parties latérales (33', 43) recouvrant les bobines (31, 32, 31', 32') des agencements de bobines de guidage de fil (30, 30') et/ou des éléments de serrage (42') des dispositifs serre-fil (40') sont respectivement associées à au moins une partie des agencements de bobines de guidage de fil (30, 30') et/ou des dispositifs serre-fil (40'), et que chaque partie latérale (33', 43') est reliée de manière amovible et détachable ou dépliable ou pivotable à l'aide d'une attache rapide (34', 44') à l'agencement de bobines de guidage de fil (30, 30') ou dispositif serre-fil (40') respectivement concerné.

2. Presse à balles selon la revendication 1, **caractérisée en ce que** chaque / l'attache rapide (34', 44') est constituée d'une vis étoile.

3. Presse à balles selon la revendication 1 ou 2, **caractérisée en ce que** les fils de ficelage (20, 20') sont formés pour chaque ficelage (14) par un fil de brin inférieur (20) et un fil de brin supérieur (20') qui sont reliés l'un à l'autre respectivement en deux drilles d'extrémités de fil (15, 15') situées sur ou à proximité des bords obliques supérieurs (13') du ballot pressé (13).

4. Presse à balles selon la revendication 3, **caractérisée en ce que** pour plusieurs ficelages (14) prévus pour chaque ballot pressé (13), un nombre correspondant de bobines de réserve de fil (21) pour le fil de brin inférieur (20) sont agencés répartis de manière uniforme sur les deux côtés longitudinaux de la presse à balles (1), et que pour une première partie des ficelages (14), l'amenée de fil de brin inférieur (20) audit un côté longitudinal, et pour une deuxième partie du ficelage (14), l'amenée du fil de brin inférieur (20) est agencée sur l'autre côté longitudinal de la presse à balles (1).

5. Presse à balles selon la revendication 3 ou 4, **caractérisée en ce que** pour plusieurs ficelages (14) prévus pour chaque ballot pressé (13), des bobines de réserve de fil (21') pour le fil de brin inférieur (20') en nombre correspondant sont agencées les unes à côté des autres sur une face supérieure de la presse à balles (1).

6. Presse à balles selon l'une quelconque des revendications 1 à 5, **caractérisée en ce que** les moyens de guidage des fils de ficelage (20, 20') comprennent des tuyaux de conduite de fil (51, 51') agencés sur la presse à balles (1).

7. Presse à balles selon l'une quelconque des revendications 1 à 6, **caractérisée en ce que** les moyens de guidage des fils de ficelage (20, 20') comprennent des œillets de conduite de fil (52) en forme de mousquetons fixés sur la presse à balles (1).

8. Presse à balles selon l'une quelconque des revendications 1 à 7, **caractérisée en ce que** les moyens de guidage des fils de ficelage (20, 20') comprennent des goupilles de sécurité (53, 53') en forme de broche de retenue de ressort et/ou attelle fixée de manière amovible sur la presse à balles (1), notamment à proximité de la périphérie extérieure des bobines de guidage de fil (31, 32, 31', 32').

9. Presse à balles selon l'une quelconque des revendications 1 à 8, **caractérisée en ce que** dans des agencements de bobines de conduite de fil (30) présentant chacun plusieurs bobines (31, 32), au moins une bobine (32) peut être ajustée par rapport à l'autre bobine (31) ou aux autres bobines (31) dans sa position entre une position de travail entraînant une déviation du fil pour un ficelage de ballots (13) et une position d'enfilage sans déviation de fil pour l'enfilage d'un fil de ficelage (20, 20') dans l'agencement de bobines de guidage de fil (30).

10. Presse à balles selon la revendication 9, **caractérisée en ce que** la bobine ajustable (32) est respectivement disposée sur un support de bobines (35) en forme de bras pivotable autour d'un axe de pivotement (36), verrouillable respectivement dans la position de travail et dans la position d'enfilage.
